# EUROPEAN PATENT APPLICATION

(11) **EP 3 922 132 A1**
(43) Date of publication of application: **15.12.2021**
(21) Application number: 20201195.3
(22) Date of filing: 10.10.2020
(51) Int. Cl.: A45F 3/16, A45F 3/18, A47G 19/22, A47J 41/02

(54) **METHOD FOR IMPROVING PERFORMANCE OF CUP LID AND CUP LID MANUFACTURED BY THE METHOD**

(30) Priority: 10.06.2020 CN 202010525318
(71) Applicant: Shenzhen Zhongmin Technology Co., Ltd., Shenzhen (CN)
(72) Inventor: LIN, Yitong, Shenzhen (CN)
(74) Representative: Sun, Yiming

(57) **Abstract**

A method for improving performance of a cup lid (100) and a cup lid (100) manufactured by the method are disclosed. The method includes: manufacturing a TPU handle (109) with mounting holes (113), a stainless steel outer cover (105), a stainless steel top plate (106), a PP plastic inner ring (104) with mounting snap positions (112), a PP plastic main body cover (101), a PP plastic honeycomb (103), a stainless steel vacuum piece (102), a silicone ring (107), and a sealing ring (108); setting connecting positions on the PP plastic main body cover (101), using bridge connectors (110) to guide through the mounting snap positions (112), the connecting positions (111) and the mounting holes (113); pressing the TPU handle (109), the stainless steel outer cover (105) and the PP plastic inner ring (104) against the PP plastic main body cover (101) using the bridge connectors (110), so that a middle part of the bridge connector (110) is restricted by a bottom end of the connecting position (111) and a top end of the mounting snap position (112) to limit the position of the PP plastic inner ring (104). The product adopts a manufacturing process with mechanical snaps, the stainless steel vacuum piece (102) inside is formed through an injection molding process, thus the texture and durability of the product are ensured. The handle is made of TPU material, and its texture, strength and the steel pins demonstrate the texture of the product, as well as improve product quality.

## Description

### TECHNICAL FIELD

The present disclosure relates to the technical field of vacuum cups, in particular to a method for improving performance of a cup lid and a cup lid manufactured by the method.

### BACKGROUND

The conventional manufacturing process of cup lids basically requires treatment via additional processes (such as welding, glue, ultrasonic, etc.) in existing technology. These treatment methods have advantages of their simple principles and ease of operation. However, there are also problems in the stability and durability of products. Especially, the function and life of the cup lid itself will be severely reduced after a period of use, considering various external factors. Moreover, the handle part is essential when using the cup lid. Soft rubber and hard rubber are usually used in the prior art, but both have problems, as the soft rubber does not possess enough strength and the hard rubber does not possess good quality and user experience. Therefore, an urgent need to improve this situation is raised in the market.

Information disclosed in this background section is merely for enhancement of understanding of the general background of the present disclosure and should not be taken as an acknowledgment or any form of suggestion that this information constitutes the prior art known to those skilled in the art.

Based on the above-mentioned reasons, the applicant proposes a method for improving performance of a cup lid and a cup lid manufactured by the method.

### SUMMARY

In order to meet the above requirements, the first objective of the present disclosure is to provide a method for improving performance of a cup lid.

The second objective of the present disclosure is to provide a cup lid manufactured by the method for improving performance of a cup lid.

In order to achieve the above-mentioned objectives, the following technical proposal is applied in the present disclosure:
An aspect of the present disclosure provides a method for improving performance of a cup lid, which includes the following steps:
Manufacturing a TPU handle with mounting holes, a stainless steel outer cover to be connected with the TPU handle, a stainless steel top plate to be mounted on the stainless steel outer cover, a PP plastic inner ring with mounting snap positions, a PP plastic main body cover for mounting the PP plastic inner ring, a cylindrical PP plastic honeycomb, a stainless steel vacuum piece for mounting the PP plastic honeycomb, a silicone ring and a sealing ring, respectively.

Setting connecting positions on the PP plastic main body cover, such that, at positions of the mounting snap positions of the PP plastic inner ring and the connecting positions, using bridge connectors to guide through the mounting snap positions, the connecting positions and the mounting holes. Pressing the TPU handle, the stainless steel outer cover and the PP plastic inner ring against the PP plastic main body cover using the bridge connectors, so that a middle part of the bridge connector is restricted by a bottom end of the connecting position and a top end of the mounting snap position to limit the position of the PP plastic inner ring.

Providing a plurality of snapping grooves on the PP plastic main body cover, providing a plurality of snapping protrusions on the PP plastic inner ring, fitting the snapping grooves to the snapping protrusions, and mounting the PP plastic inner ring on the PP plastic main body cover.

Mounting the stainless steel top plate to an upper end of the stainless steel outer cover, arranging a horizontal connecting structure at a bottom part of the stainless steel top plate, and providing an annular protrusion protruding inward on a top end of the stainless steel outer cover, disposing the connecting structure between the annular protrusion and the PP plastic inner ring.

Mounting the silicone ring between the PP plastic inner ring and the stainless steel top plate, and assembling the stainless steel vacuum piece to an upper end of the PP plastic main body cover by an injection molding process, abutting the PP plastic honeycomb mounted in the stainless steel vacuum piece against the stainless steel top plate, mounting the PP plastic main body cover on a cup body, and disposing a sealing ring between the cup body and the PP plastic main body cover.

In a possible implementation, a manufacturing process of the TPU handle is as follows.

Making a plastic mold for the handle, injecting molten material into the plastic mold to obtain the TPU handle with mounting holes, and polishing and texturing surface of the TPU handle.

In a possible implementation, the TPU handle is U-shaped, and the TPU handle is provided with a plurality of surface holes which are produced by inclined pulling of a sliding block.

In a possible implementation, the stainless steel outer cover is made by cold rolling.

In a possible implementation, a manufacturing process of the stainless steel vacuum piece is as follows.

Producing an upper cover and a lower cover constituting the stainless steel vacuum piece, using a getter in a welding process of the upper and lower covers to obtain a steel main body, and treating the steel main body in a vacuum furnace by using a brazing material to obtain the stainless steel vacuum piece with a mounting cavity opening on an upper end.

In a possible implementation, an assembling process of the stainless steel vacuum piece and the upper end of the PP plastic main body cover using the injection molding process includes the following steps.

Placing the stainless steel vacuum piece in a mold and injecting a plastic raw material, so that the plastic raw material is formed, forming a PP plastic main body cover connected with the stainless steel vacuum piece.

In a possible implementation, the stainless steel vacuum piece and the PP plastic main body cover are seamlessly connected.

In a possible implementation, the inner ring of the PP plastic main body cover is provided with threads.

In a possible implementation, the number of the bridge connectors is two.

In another aspect, the present disclosure also provides a cup lid manufactured by the method for improving performance of a cup lid, based on the method for improving performance of a cup lid described in any of the above. The cup lid includes a PP plastic main body cover, a stainless steel vacuum piece connected with the PP plastic main body cover, a PP plastic honeycomb disposed in the stainless steel vacuum piece, a PP plastic inner ring sleeved on the PP plastic main body cover, a stainless steel outer cover wrapping around the PP plastic inner ring, a stainless steel top plate mounted on a top end of the stainless steel outer cover, a silicone ring arranged between the stainless steel top plate and the PP plastic main body cover, a sealing ring used for connecting the PP plastic main body cover and the cup body, a TPU handle arranged on the stainless steel outer cover, and bridge connectors used for fixing the TPU handle and connecting the stainless steel outer cover, the PP plastic inner ring and PP plastic main body cover in sequence.

Compare with the prior art, the advantageous effect of the present disclosure is that the cup lid manufactured by the method of the present disclosure adopts a manufacturing process with mechanical snaps, the stainless steel vacuum piece inside is formed through an injection molding process, and the steel pins on both sides are engaged with the plastic pieces above and below, thus the texture and durability of the product are ensured. The handle is made of TPU material, and its texture, strength and the steel pins demonstrate the texture of the product, as well as improve product quality. No additional processes (such as welding, glue, ultrasonic, etc.) are required, the product has strong stability and is environmentally friendly so that it may effectively ensure food safety, avoid heavy metal pollution, and protect the safety of users.

### BRIEF DESCRIPTION OF THE DRAWINGS

In order to more clearly illustrate the technical proposals of the embodiments of the present disclosure, the drawings used in the description of the embodiments will be briefly described below. Obviously, the drawings in the following description are some embodiments of the present disclosure, one of ordinary skill in the art, without any creative effort, can obtain other drawings based on these drawings.
Fig. 1 is a schematic flowchart of a specific embodiment of a method for improving performance of a cup lid according to the present disclosure;
Fig. 2 is a schematic flowchart of another embodiment of a method for improving performance of a cup lid according to the present disclosure;
Fig. 3 is a schematic flowchart of yet another embodiment of a method for improving performance of a cup lid according to the present disclosure;
Fig. 4 is a structural view of a specific embodiment of a cup lid manufactured by the method for improving performance of a cup lid according to the present disclosure;
Fig. 5 is an exploded structural view of Fig. 4;
Fig. 6 is a top view of the structure of Fig. 4;
Fig. 7 is a cross-sectional view of the structure of Fig. 6;
Fig. 8 is a partial enlarged view of the structure of Fig. 7;
Fig. 9 is a cross-sectional view of the structure of another embodiment of the cup lid manufactured by the method for improving performance of a cup lid according to the present disclosure;
Fig. 10 is a cross-sectional view of the structure of another embodiment of the cup lid manufactured by the method for improving performance of a cup lid according to the present disclosure;
Fig. 11 is a schematic view of the structure of another embodiment of the cup lid manufactured by the method for improving performance of a cup lid according to the present disclosure;
Fig. 12 is a schematic view of the structure of another embodiment of the cup lid manufactured by the method for improving performance of a cup lid according to the present disclosure;
Fig. 13 is a schematic view of the structure of another embodiment of the cup lid manufactured by the method for improving performance of a cup lid according to the present disclosure;
Fig. 14 is a cross-sectional view of the structure of another embodiment of the cup lid manufactured by the method for improving performance of a cup lid according to the present disclosure;
Fig. 15 is a schematic view of the structure of another embodiment of the cup lid manufactured by the method for improving performance of a cup lid according to the present disclosure; and
Fig. 16 is a cross-sectional view of the structure of another embodiment of the cup lid manufactured by the method for improving performance of a cup lid according to the present disclosure.

### Reference numbers

100 cup lid, 101 PP plastic main body cover, 102 stainless steel vacuum piece, 103 PP plastic honeycomb, 104 PP plastic inner ring, 105 stainless steel outer cover, 106, stainless steel top plate, 107 silicone ring, 108 sealing ring, 109 TPU handle, 110 bridge connector, 111 connecting position, 112 mounting snap position, 113 mounting hole, 114 snapping groove, 115 snapping protrusion, 116 connecting structure, 117 annular protrusion, 200 cup body

### DETAILED DESCRIPTION OF THE EMBODIMENTS

The technical proposals in the embodiments of the present disclosure will be clearly and completely described in conjunction with the accompanying drawings in the embodiments of the present disclosure. It is apparent that the described embodiments are merely part of the embodiments of the present disclosure rather than all embodiments. Based on the embodiments of the present disclosure, all other embodiments obtained by those skilled in the art without creative work fall within the scope of protection of the present disclosure.

It should be understood that, when used in this specification and the appended claims, the terms "include" and "comprise" indicate the presence of the described features, integers, steps, operations, elements and / or components, but do not preclude the presence or addition of a plurality of other features, integers, steps, operations, elements, components, and/or collections thereof.

As used in the embodiment of the present disclosure and in the appended claims, the singular forms "a", "one" and "the" are intended to include the plural forms unless the context clearly indicates otherwise.

It should be further understood that the term "and/or" used in the specification and appended claims of the present disclosure refers to any combination and all possible combinations of one or more of the items listed in the associated, and includes these combinations.

In the description of the present disclosure, it should be understood that the terms "center", "longitudinal direction", "transverse direction", "length", "width", "thickness", "upper", "lower", "front", " "rear", "left", "right", "vertical", "horizontal", "top", "bottom", "inner", "outer", "clockwise", "counterclockwise" etc. indicate spatial relationship that is based on the orientation or positional relationship shown in the drawings, and are only for the convenience of describing the disclosure and simplifying the description, rather than indicating or implying that the device or element referred to must have a specific orientation and be constructed and operated in a specific orientation, therefore these cannot be understood as a limitation to the present disclosure.

In addition, the terms "first" and "second" are used for descriptive purposes only, and cannot be understood as indicating or implying relative importance or implicitly indicating the number of technical features referred to. Therefore, the features defined as "first" and "second" may explicitly or implicitly include one or more of the features. In the description of the present disclosure, the meaning of "plurality" is two or more, unless otherwise specified.

In the present disclosure, unless otherwise clearly specified and limited, the terms "installation", "connected", "fixed" and other terms should be interpreted as broad meaning, for example, it may be connected or detachably connected, or formed into one entity; it may be a physical connection or electrical connection; it may be directly connected, or it may be indirectly connected through an intermediate medium; it may be an internal communication or interaction between two elements. Those skilled in the art can understand the specific meanings of the above terms in the present disclosure according to specific situations.

In the present disclosure, unless otherwise clearly specified and defined, the first feature "above" or "below" the second feature may include the direct contact of the first and second feature, or may include the first and second features not in direct contact but through another feature therebetween. Moreover, the first feature is "on", "above" and "over" the second feature includes that the first feature is directly above and obliquely above the second feature, or simply means that the first feature is higher in level than the second feature. The first feature is "under", "below" and "underneath" the second feature includes that the first feature is directly below and obliquely below the second feature, or simply means that the first feature is lower in level than the second feature.

In the description of the present disclosure, the description referring to the terms "one embodiment", "some embodiments", "examples", "specific examples", or "some examples" means the specific features, structures, materials or characteristics described in conjunction with the embodiment or examples is included in at least one embodiment or example of the present disclosure. In the present disclosure, the illustrative expression of the above terms should not be understood as having to refer to the same embodiment or example. Moreover, the specific features, structures, materials, or characteristics described may be combined in any suitable manner in any one or more embodiments or examples. In addition, those skilled in the art may bind and combine different embodiments or examples described in the present disclosure.

The technical proposals in the embodiments of the present disclosure will be clearly and completely described in conjunction with the accompanying drawings in the embodiments of the present disclosure. It is apparent that the described embodiments are merely part of the embodiments of the present disclosure rather than all embodiments. Based on the embodiments of the present disclosure, all other embodiments obtained by those skilled in the art without creative work fall within the scope of protection of the present disclosure.

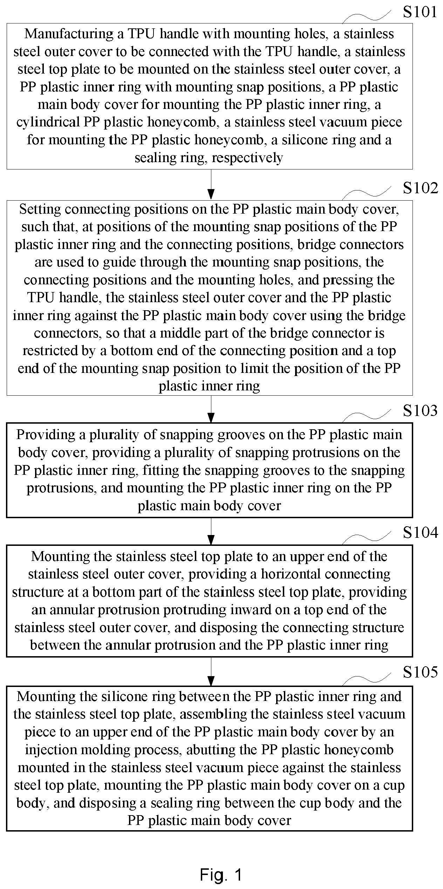

Fig. 1 is a schematic flowchart of a specific embodiment of a method for improving performance of a cup lid according to the present disclosure, which includes the following steps.

Step S101: manufacturing a TPU handle with mounting holes, a stainless steel outer cover to be connected with the TPU handle, a stainless steel top plate to be mounted on the stainless steel outer cover, a PP plastic inner ring with mounting snap positions, a PP plastic main body cover for mounting the PP plastic inner ring, a cylindrical PP plastic honeycomb, a stainless steel vacuum piece for mounting the PP plastic honeycomb, a silicone ring and a sealing ring, respectively.

Step S102: setting connecting positions on the PP plastic main body cover, such that, at positions of the mounting snap positions of the PP plastic inner ring and the connecting positions, bridge connectors are used to guide through the mounting snap positions, the connecting positions and the mounting holes, and pressing the TPU handle, the stainless steel outer cover and the PP plastic inner ring against the PP plastic main body cover using the bridge connectors, so that a middle part of the bridge connector is restricted by a bottom end of the connecting position and a top end of the mounting snap position to limit the position of the PP plastic inner ring.

Step S103: providing a plurality of snapping grooves on the PP plastic main body cover, and providing a plurality of snapping protrusions on the PP plastic inner ring, fitting the snapping grooves to the snapping protrusions, and mounting the PP plastic inner ring on the PP plastic main body cover.

Step S104: mounting the stainless steel top plate to an upper end of the stainless steel outer cover, providing a horizontal connecting structure at a bottom part of the stainless steel top plate, providing an annular protrusion protruding inward on a top end of the stainless steel outer cover, and disposing the connecting structure between the annular protrusion and the PP plastic inner ring.

Step S105: mounting the silicone ring between the PP plastic inner ring and the stainless steel top plate, assembling the stainless steel vacuum piece to an upper end of the PP plastic main body cover by an injection molding process, abutting the PP plastic honeycomb mounted in the stainless steel vacuum piece against the stainless steel top plate, and mounting the PP plastic main body cover on a cup body, and disposing a sealing ring between the cup body and the PP plastic main body cover.

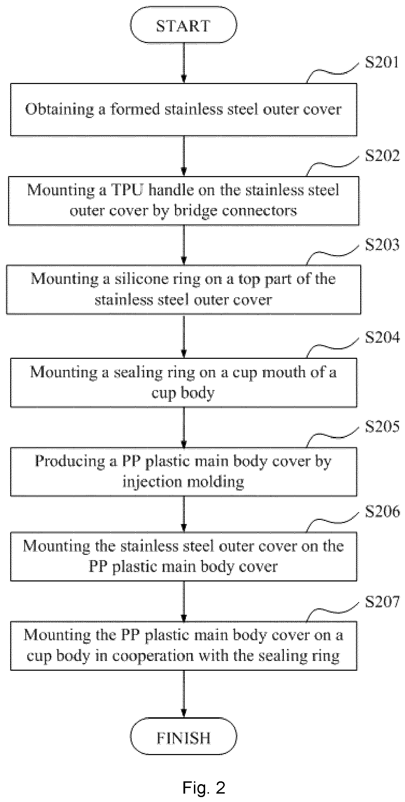

An embodiment referring to the flowchart in Fig. 2 includes:
Step S201: obtaining a formed stainless steel outer cover;
Step S202: mounting a TPU handle on the stainless steel outer cover by bridge connectors;
Step S203: mounting a silicone ring on a top part of the stainless steel outer cover;
Step S204: mounting a sealing ring on a cup mouth of a cup body;
Step S205: producing a PP plastic main body cover by injection molding;
Step S206: mounting the stainless steel outer cover on the PP plastic main body cover;
Step S207: mounting the PP plastic main body cover on the cup body in cooperation with the sealing ring.

Above is the assembly sequence of the cup lid structure manufactured by the above steps. By manufacturing the cup lid through the steps shown in the figure, it can not only prevent heat loss, but also reduce processing steps and avoid heavy metal pollution.

In an embodiment, main steps of the method of the present disclosure include:
purchasing raw materials, feeding, forming, finishing, cleaning, polishing, surface painting/plastic spraying, and assembling.

In some embodiments, the above-mentioned stainless steel structure may be a stainless steel top plate welded from a food grade 304 stainless steel plate with a thickness of 5 mm.

In an embodiment, the manufacturing process of the TPU handle is as follows.

Making a plastic mold for the handle, injecting molten material into the plastic mold to obtain a TPU handle with mounting holes, and polishing and texturing surface of the TPU handle. The surface of the TPU handle may be formed with several logos.

In an embodiment, the TPU handle is U-shaped, and the TPU handle is provided with a plurality of surface holes which are produced by means of inclined pulling of a sliding block. The above-mentioned surfaces holes may increase friction in order to help the user to operate.

In an embodiment, the stainless steel outer cover is made by cold rolling.

In some embodiments, the seamless stretched inner container used in some cup products is formed by hot rolling, and vacuum annealing is required to improve the toughness of the product and facilitate later processing.

Specifically, the above-mentioned stainless steel outer cover and other stainless steel products require heat treatment to enhance product performance.

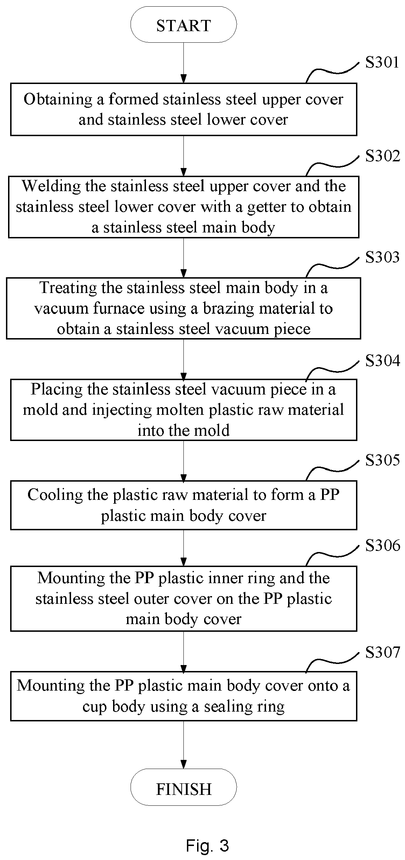

In an embodiment as shown in Fig. 3, the manufacturing process of the stainless steel vacuum piece includes:
producing an upper cover and a lower cover constituting the stainless steel vacuum piece, using a getter in the welding process of the upper and lower covers to obtain a stainless steel main body, and treating the stainless steel main body in a vacuum furnace by using a brazing material to obtain the stainless steel vacuum piece with a mounting cavity opening on an upper end.

In an embodiment, referring to Fig. 3, the steps of assembling the stainless steel vacuum piece to the upper end of the PP plastic main body cover using the injection molding process include:
Step S301: obtaining a formed stainless steel upper cover and stainless steel lower cover;
Step S302: welding the stainless steel upper cover and the stainless steel lower cover in cooperation with a getter to obtain a stainless steel main body;
Specifically, a vacuum needs to be maintained between the stainless steel upper cover and the stainless steel lower cover for better thermal insulating effect;
Step S303: treating the stainless steel main body in a vacuum furnace using a brazing material to obtain a stainless steel vacuum piece;
Step S304: placing the stainless steel vacuum piece in a mold, and injecting molten plastic raw material into the mold;
Step S305: cooling the plastic raw material to form a PP plastic main body cover;
Step S306: mounting the PP plastic inner ring and the stainless steel outer cover on the PP plastic main body cover;
Step S307: mounting the PP plastic main body cover onto a cup body with the cooperation of a sealing ring.

The conventional process of plastic piece and steel piece is selected from interference fitting and glue-assisted fixing. Although the former is interference fitted, there is still a gap, which is easy to store water during cleaning and unsanitary. The latter has no gaps, but the chemical properties of the glue do not meet the criteria of food hygiene inspection, especially when it is applied to this product (the product structure is an internal part, and is in contact with water). In summary, a new process as mentioned above that has not been used in the industry is used. With the new process, the product qualification rate is improved, facilitating subsequent process. The process is hygienic and environmentally friendly. The product texture, product functions, product performance, dimensional stability are greatly improved and enhanced. In particular, the stainless steel vacuum piece is integrally formed with the plastic when cooled after injection molding. There is no gap or water stored. Auxiliary supplies (glue, rivets, etc.) are not required, thus the process is simplified, and the cost is reduced.

In an embodiment, the stainless steel vacuum piece and the PP plastic main body cover are seamlessly connected.

In a possible embodiment, an inner ring of the PP plastic main body cover is provided with threads.

In some embodiments, an outer ring of the PP plastic main body cover is provided with threads. At this time, the PP plastic main body cover is embedded into the cup mouth.

In an embodiment, the number of the bridge connectors is two. The bridge connectors may be steel pins. Specifically, the plastic pieces were previously fixed by snapping strips. In the present disclosure, the PP plastic inner ring and the PP plastic main body cover are snapped and fixed in an up and down direction under an external force, and the inner ring is fixed to the PP plastic main body cover to prevent falling off. Two sides of the PP plastic main body cover are provided with buckles for the steel pins (namely the mounting snap positions), and the steel pins act as bridge connectors by this arrangement. The steel pins pass through two holes on the left side and right side of the stainless steel outer cover, and fix the TPU handle and the stainless steel outer cover. The steel pins can also connect the PP plastic inner ring and the PP plastic main body cover, achieving a good fixing and supporting effect that helps the use of the cup lid.

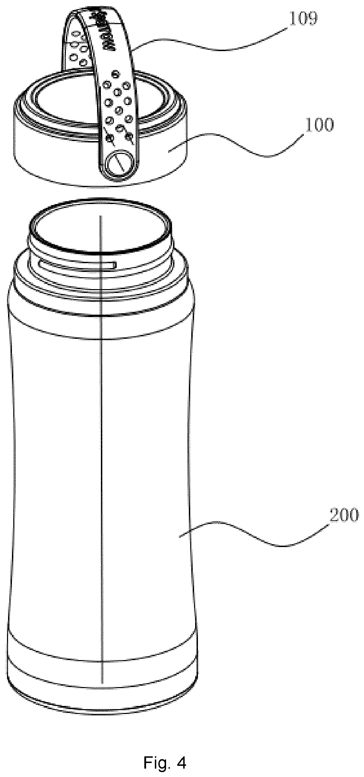

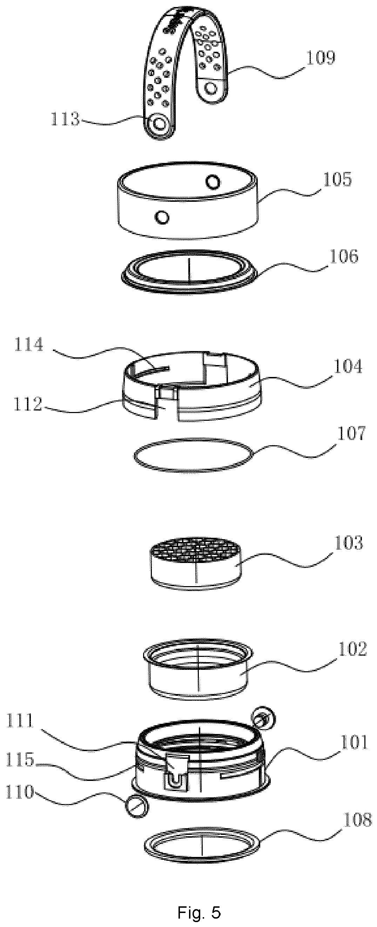

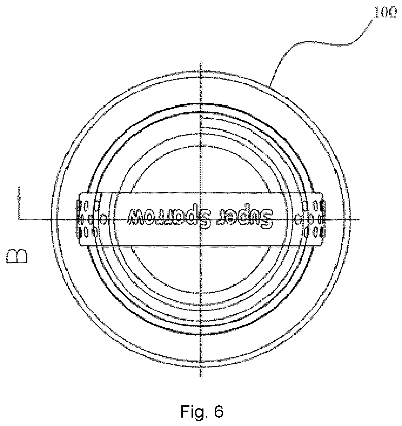

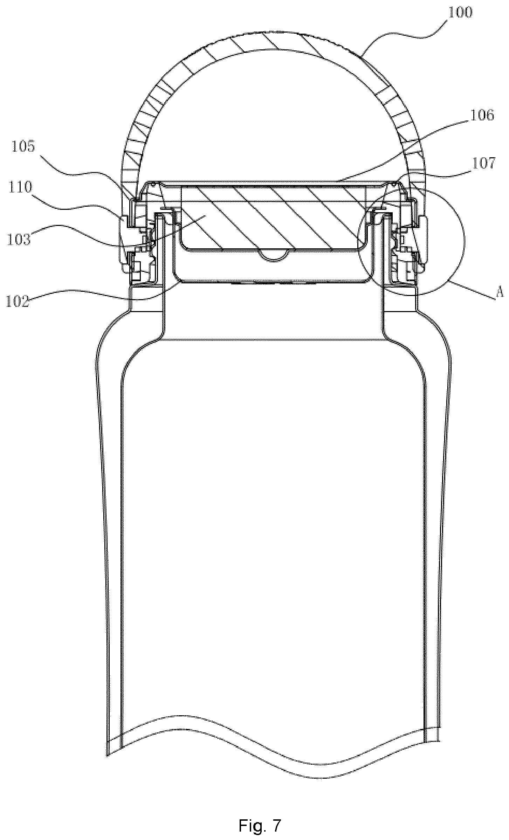

As shown in Figs. 4-8, the present disclosure further provides a cup lid 100 manufactured by the method for improving performance of a cup lid, the cup lid 100 is used for mounting on the cup body 200. Based on the method for improving performance of a cup lid described in any of the above, the cup lid 100 includes a PP plastic main body cover 101, a stainless steel vacuum piece 102 connected with the PP plastic main body cover 101, a PP plastic honeycomb 103 disposed in the stainless steel vacuum piece 102, a PP plastic inner ring 104 sleeved on the PP plastic main body cover 101, a stainless steel outer cover 105 wrapping around the PP plastic inner ring 104, a stainless steel top plate 106 mounted on a top end of the stainless steel outer cover 105, a silicone ring 107 arranged between the stainless steel top plate 106 and the PP plastic main body cover 101, a sealing ring 108 used for connecting the PP plastic main body cover 101 and the cup body 200, a TPU handle 109 arranged on the stainless steel outer cover 105, and bridge connectors 110 used for fixing the TPU handle 109 and connecting the stainless steel outer cover 105, the PP plastic inner ring 104 and PP plastic main body cover 101 in sequence.

Specifically, a sealing ring 108 is further required to be mounted between the cup mouth and the cup lid when the cup lid 100 is mounted on the cup body 200.

The PP plastic main body cover 101 is provided with connecting positions 111, the PP plastic inner ring 104 is provided with mounting snap positions 112. The mounting snap positions 112 are matched with the connecting positions 111, and the TPU handle 109 is provided with mounting holes 113. The mounting snap positions 112, the connecting positions 111 and the mounting holes 113 are connected by bridge connectors 110. The TPU handle 109, the stainless steel outer cover 105 and the PP plastic inner ring 104 are pressed against the PP plastic main body cover 101 by the bridge connectors, so that a stable connection is established between the TPU handle 109, the stainless steel outer cover 105, the PP plastic inner ring 104 and the PP plastic main body cover 101. A middle part of the bridge connector 110 is restricted by a bottom end of the connecting position 111 and a top end of the mounting snap position 112 to limit the position of the PP plastic inner ring 104, so as to achieve a stable cup lid structure.

In order to fit the PP plastic main body cover 101 to the PP plastic inner ring 104, the PP plastic main body cover 101 is provided with a plurality of snapping grooves 114, and the PP plastic inner ring 104 is provided with a plurality of snapping protrusions 115. The snapping grooves 114 are fitted with the snapping protrusions 115, so that the PP plastic inner ring 104 is mounted on the PP plastic main body cover 101 and positioned accordingly. In conjunction with the bridge connectors 110, the reliability of the structure is further improved.

The stainless steel vacuum piece 102 is a structure with a vacuum inside.

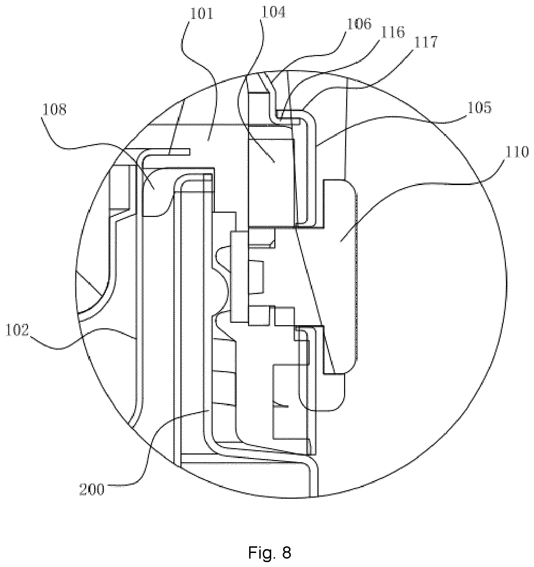

As shown in Fig. 8, the stainless steel top plate 106 is mounted to an upper end of the stainless steel outer cover 105, a horizontal connecting structure 116 is arranged at a bottom part of the stainless steel top plate 106, and an annular protrusion 117 protruding inward is provided on a top end of the stainless steel outer cover 105, so that the connecting structure 116 is located between the annular protrusion 117 and the PP plastic inner ring 104 to fix the stainless steel top plate 106.

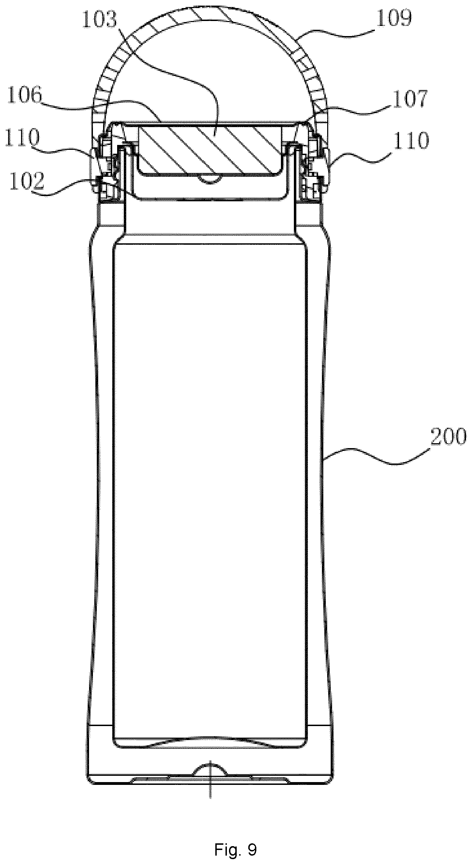

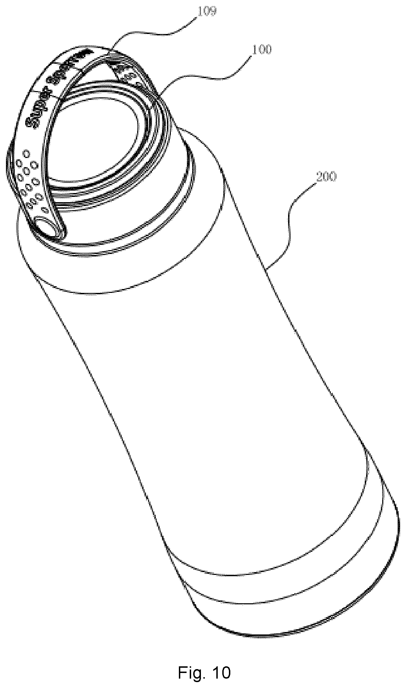

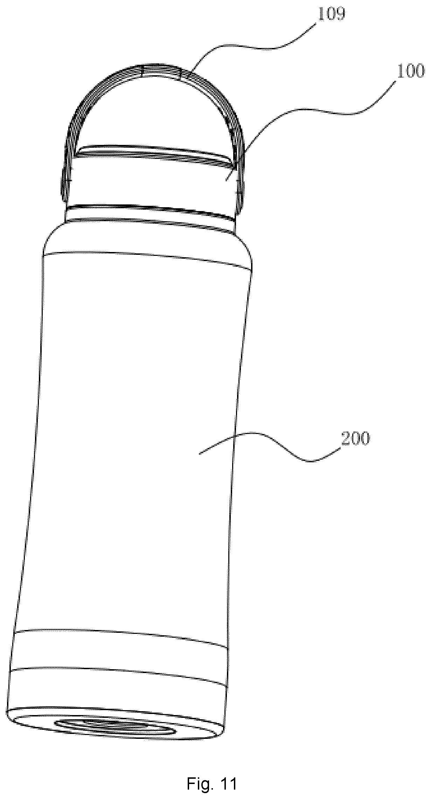

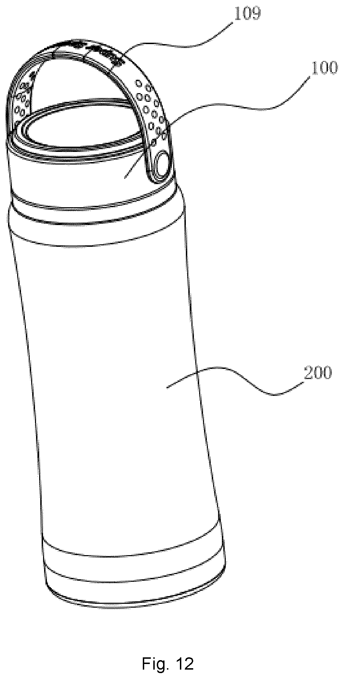

Figs. 9-12 are structural views of another embodiment of a cup lid manufactured by the method for improving performance of a cup lid according to the present disclosure. A cup body 200 with different sizes is used. The figures show the structure viewed from different angles for better understanding of the structure.

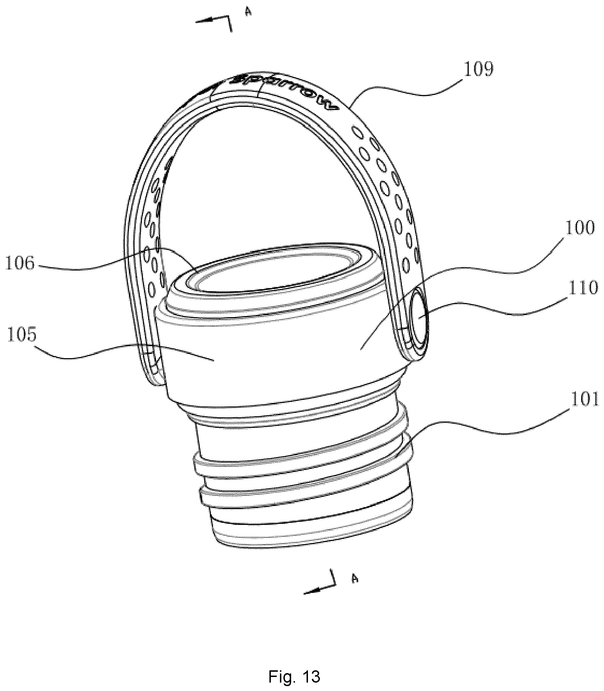

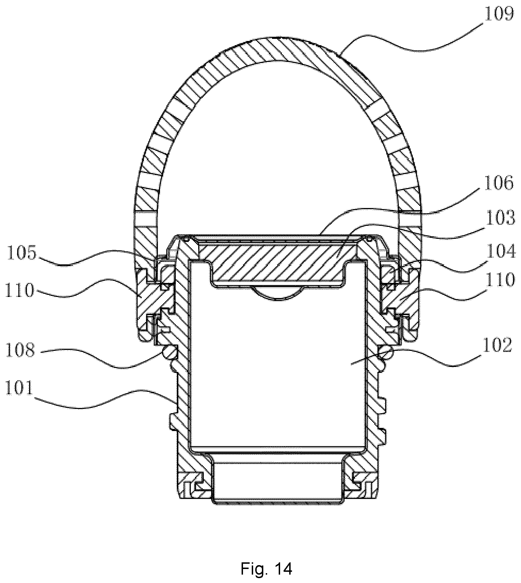

Figs. 13 and 14 are structural views of another embodiment of a cup lid manufactured by the method for improving performance of a cup lid according to the present disclosure. Specifically, external threads may be provided on the PP plastic main body cover 101 of the cup lid. Therefore, the cup lid in the present embodiment is suitable for the cup body 200 with internal threads, which is capable in a broader range of application. However, it should be noted that the embodiments disclosed in the present disclosure are for reference only, and it does not represent that the present disclosure can only be implemented in the embodiments of the present application.

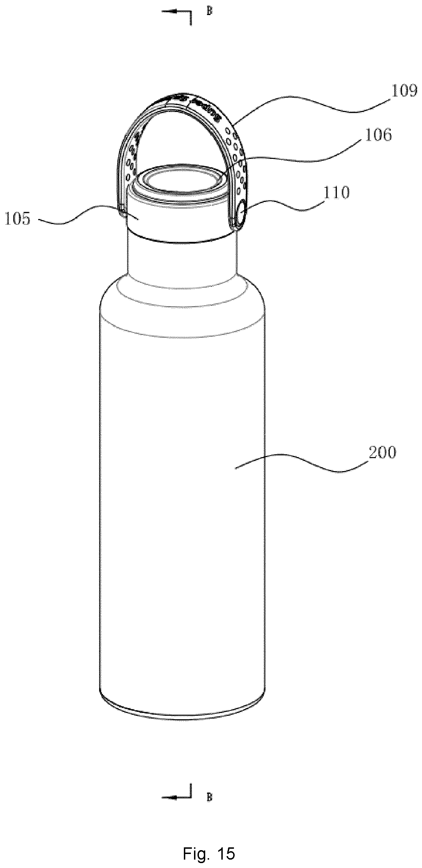

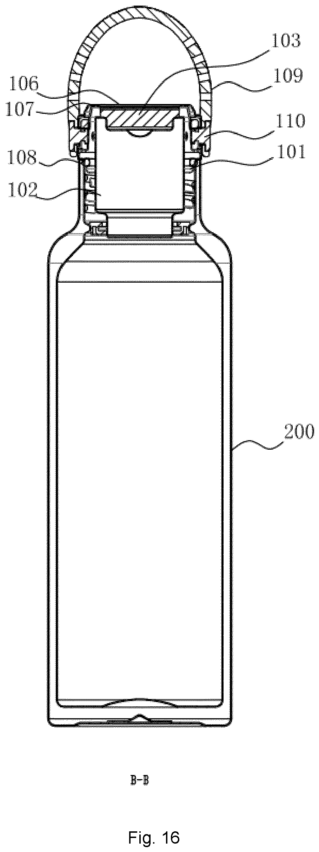

Figs. 15 and 16 are structural views of another embodiment of a cup lid manufactured by the method for improving performance of a cup lid according to the present disclosure when mounted on the cup body. As shown in the figures, the cup mouth of the cup body 200 has an internal thread structure. Therefore, the cup lid structure in the embodiment of the present disclosure can be made into a smaller size, so that the user may choose different cup lids according to their own cup bodies.

In other embodiments, the cup lid of the present disclosure may also be applied to different cup bodies, so that the assembled cup has the advantageous effects of the present disclosure.

In summary, the cup lid manufactured by the method of the present disclosure adopts mechanical snaps, the stainless steel vacuum piece inside is formed through an injection molding process, the steel pins on both sides are engaged with the plastic pieces above and below, thus the texture and durability of the product are ensured. The handle is made of TPU material, and its texture, strength and the steel pins demonstrate the texture of the product, as well as improve product quality. No additional processes (such as welding, glue, ultrasonic, etc.) are required. The product has strong stability and is environmentally friendly so that it may effectively ensure food safety, avoid heavy metal pollution, and protect the safety of users.

The order of the steps in the method of the embodiment of the present disclosure may be adjusted, merged, and deleted according to practical needs.

For those skilled in the art, various other corresponding changes and variations can be made based on the technical proposals and concepts described above, and all these changes and variations shall fall within the scope of protection of the claims of the present disclosure.

## Claims

1. A method for improving performance of a cup lid, comprising following steps:
manufacturing a TPU handle with mounting holes, a stainless steel outer cover to be connected with the TPU handle, a stainless steel top plate to be mounted on the stainless steel outer cover, a PP plastic inner ring with mounting snap positions, a PP plastic main body cover for mounting the PP plastic inner ring, a cylindrical PP plastic honeycomb, a stainless steel vacuum piece for mounting the PP plastic honeycomb, a silicone ring and a sealing ring, respectively;
setting connecting positions on the PP plastic main body cover, using bridge connectors to guide through the mounting snap positions, the connecting positions and the mounting holes at positions of the mounting snap positions of the PP plastic inner ring and the connecting positions, pressing the TPU handle, the stainless steel outer cover and the PP plastic inner ring against the PP plastic main body cover using the bridge connectors, so that a middle part of the bridge connector is restricted by a bottom end of the connecting position and a top end of the mounting snap position to limit a position of the PP plastic inner ring;
providing a plurality of snapping grooves on the PP plastic main body cover, providing a plurality of snapping protrusions on the PP plastic inner ring, fitting the snapping grooves to the snapping protrusions, and mounting the PP plastic inner ring on the PP plastic main body cover;
mounting the stainless steel top plate to an upper end of the stainless steel outer cover, arranging a horizontal connecting structure at a bottom part of the stainless steel top plate, and providing an annular protrusion protruding inward on a top end of the stainless steel outer cover, and disposing the connecting structure between the annular protrusion and the PP plastic inner ring;
mounting the silicone ring between the PP plastic inner ring and the stainless steel top plate, assembling the stainless steel vacuum piece to an upper end of the PP plastic main body cover by an injection molding process, abutting the PP plastic honeycomb mounted in the stainless steel vacuum piece against the stainless steel top plate, mounting the PP plastic main body cover on a cup body, and disposing the sealing ring between the cup body and the PP plastic main body cover.

2. The method for improving performance of a cup lid according to claim 1, wherein a manufacturing process of the TPU handle is:
making a plastic mold for the handle, injecting molten material into the plastic mold to obtain the TPU handle with mounting holes, and polishing and texturing surface of the TPU handle.

3. The method for improving performance of a cup lid according to claim 1, wherein the TPU handle is U-shaped, and the TPU handle is provided with a plurality of surface holes which are produced by inclined pulling of a sliding block.

4. The method for improving performance of a cup lid according to claim 1, wherein the stainless steel outer cover is made by cold rolling.

5. The method for improving performance of a cup lid according to claim 1, wherein a manufacturing process of the stainless steel vacuum piece is:
producing an upper cover and a lower cover constituting the stainless steel vacuum piece, using a getter in a welding process of the upper and lower covers to obtain a steel main body, and treating the steel main body in a vacuum furnace by using a brazing material to obtain the stainless steel vacuum piece with a mounting cavity opening on an upper end.

6. The method for improving performance of a cup lid according to claim 5, wherein the step of assembling the stainless steel vacuum piece onto the upper end of the PP plastic main body cover using the injection molding process comprises:
placing the stainless steel vacuum piece in a mold and injecting a plastic raw material, so that the plastic raw material is formed, forming the PP plastic main body cover connected with the stainless steel vacuum piece.

7. The method for improving performance of a cup lid according to claim 6, wherein the stainless steel vacuum piece and the PP plastic main body cover are seamlessly connected.

8. The method for improving performance of a cup lid according to claim 7, wherein an inner ring of the PP plastic main body cover is provided with threads, or an outer ring of the PP plastic main body cover is provided with threads.

9. The method for improving performance of a cup lid according to claim 1, wherein the number of the bridge connectors is two.

10. A cup lid manufactured by the method for improving performance of a cup lid according to any of claims 1-9, wherein the cup lid comprises a PP plastic main body cover, a stainless steel vacuum piece connected with the PP plastic main body cover, a PP plastic honeycomb disposed in the stainless steel vacuum piece, a PP plastic inner ring sleeved on the PP plastic main body cover, a stainless steel outer cover wrapping around the PP plastic inner ring, a stainless steel top plate mounted on a top end of the stainless steel outer cover, a silicone ring arranged between the stainless steel top plate and the PP plastic main body cover, a sealing ring used for connecting the PP plastic main body cover and a cup body, a TPU handle arranged on the stainless steel outer cover, and bridge connectors used for fixing the TPU handle and connecting the stainless steel outer cover, the PP plastic inner ring and the PP plastic main body cover in sequence.
